(19) **Europäisches Patentamt / European Patent Office / Office européen des brevets**

(11) **EP 4 652 894 A1**

(12) **EUROPEAN PATENT APPLICATION**

(43) Date of publication:
26.11.2025 Bulletin 2025/48

(51) International Patent Classification (IPC):
*A46B 9/04* (2006.01)    *A46B 15/00* (2006.01)
*A46D 1/00* (2006.01)

(21) Application number: 24177305.0

(22) Date of filing: 22.05.2024

(52) Cooperative Patent Classification (CPC):
A46B 9/04; A46B 15/0085; A46D 1/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **The Procter & Gamble Company**
Cincinnati, OH 45202 (US)

(72) Inventors:
• JUNGNICKEL, Uwe
61476 Kronberg (DE)
• WOLF, Michael
61476 Kronberg (DE)
• STÖRKEL, Ulrich
61476 Kronberg (DE)
• HUNDESHAGEN, Phillip
61476 Kronberg (DE)

• WEGEMANN, Maria
61476 Kronberg (DE)
• CORTECCHIA, Elisa
61476 Kronberg (DE)
• LANGHAMMER, Dominik Heinz
61476 Kronberg (DE)
• SCHUBERT, Friedrich Thomas
61476 Kronberg (DE)
• SEELING, Kathrin
61476 Kronberg (DE)
• ALLER, Florence
1213 Geneva (CH)
• ZEROMSKIS, Mindaugas
1213 Geneva (CH)

(74) Representative: **P&G Patent Germany**
Procter & Gamble Service GmbH
Sulzbacher Straße 40
65824 Schwalbach am Taunus (DE)

(54) **HEAD FOR AN ORAL CARE IMPLEMENT AND ORAL CARE IMPLEMENT**

(57)    A head for an oral care implement, the head comprises a number of colored filaments of different types, the filaments extending from a mounting surface of the head and being grouped together to define a color pattern. The number of colored filaments of different types comprises at least a first type of filament having time-controlled color changing properties and a second type of filament having time-controlled color changing properties, so that each of the first and second type of filament changes its color from an initial color to a second color within a pre-defined time period. The initial color of the first and second type of filament defining an initial color pattern $\overline{C^*_{ab\ new}}$, while the second color of the first and second type of filament defining a second color pattern $\overline{C^*_{ab\ used}}$. The change from the initial color pattern to the second color pattern is defined by a difference in value of colorfulness $\Delta \overline{C^*_{ab}} = \overline{C^*_{ab\ new}} - \overline{C^*_{ab\ used}}$. The change in value of colorfulness $\Delta \overline{C^*_{ab}}$ is at least 5 in response to use and wear.

Fig. 1

## Description

FIELD OF THE INVENTION

The present disclosure is concerned with a head for an oral care implement, the head comprising a number of colored filaments of different types, the filaments extending from a mounting surface of the head and being grouped together to define a color pattern. The number of colored filaments comprises at least a first type of filament and a second type of filament, both types having time-controlled color changing properties. The present disclosure is further concerned with an oral care implement comprising such head.

BACKGROUND OF THE INVENTION

Tufts composed of a plurality of filaments for oral care implements, like manual and powered toothbrushes, are well known in the art. Generally, the filaments are attached to a mounting surface of a head intended for insertion into a user's oral cavity. A grip handle is usually attached to the head, which handle is held by the user during brushing. The head is either permanently connected to or repeatedly attachable to and detachable from the handle.

Brushing teeth is known to be the most effective way to maintain oral hygiene. In order to clean teeth effectively and to achieve good cleaning results, filaments of a toothbrush must be able to disrupt plaque from the teeth and take it away. However, cleaning effectiveness also depends on other factors such as brushing habits of the user, frequency, intensity and duration of brushing. Further, there are several features providing a toothbrush with specific cleaning characteristic to achieve maximized cleaning effectiveness. These features include material, size, shape, strength and resiliency of the brush filaments and length, width and overall shape and area of the brushing surface. Other features affecting the cleaning effectiveness of a toothbrush include the number of tufts (bundles of individual filaments), and the arrangement of the tufts on the brush head. However, there is general agreement in the art that wear of toothbrush filaments is a crucial factor, which can dramatically diminish the effectiveness of a toothbrush in maintaining oral hygiene. For example, the art recognizes and acknowledges that diminished effectiveness of a toothbrush by wear can result in increased plaque accumulation and increased risks to periodontium tissue. Further, worn out filaments can damage teeth and gums.

The degree of wear of a toothbrush is primarily a function of the properties of the filament and the mechanical force applied to the filaments during brushing. The degree of wear can also be accelerated to some extent by abrasive materials normally contained in dentifrices. Brush wear results in tearing, splaying, expansion and fraying of the filaments as well as in a decrease in strength and resiliency of the filaments which is manifested by single filaments deviating from their original direction. Moreover, wear is manifested by a change in the overall shape and size of the brushing surface area and by changes in the texture of the filament. While toothbrush wear varies from user to user, studies indicate that a toothbrush commonly used has a useful effective life of from about eight to twelve weeks. Thereafter, wear causes sufficient deterioration of the filaments to warrant replacement of the brush in order to assure continued maintenance of effective oral hygiene.

Unfortunately, toothbrushes are usually not replaced regularly and oftentimes are used far beyond their effective useful life. As mentioned, the dental profession has recommended replacement of toothbrushes after about three months of use. However, annual toothbrush consumption figures indicate that toothbrush users replace their toothbrushes about once a year. The dental profession has made an earnest effort to educate the public about the need to assess the wear of a toothbrush being used to determine, if it should be discarded and replaced. However, these efforts have had limited success since the user has the responsibility to remember the condition of a toothbrush which should be discarded and to remember to monitor and continually assess the condition of the toothbrush. Accordingly, a more effective approach is needed to provide reliable means to signal or warn a toothbrush user when a toothbrush has become sufficiently affected by wear that it should be discarded and replaced.

It is an object of the present disclosure to provide a head for an oral care implement which provides reliable means to signal or warn a toothbrush user when a toothbrush has become sufficiently affected by wear. It is also an object of the present disclosure to provide an oral care implement comprising such head.

SUMMARY OF THE INVENTION

In accordance with one aspect, a head for an oral care implement is provided, the head comprising a number of colored filaments of different types, the filaments extending from a mounting surface of the head and being grouped together to define a color pattern,

the number of colored filaments of different types comprising at least a first type of filament and a second type of filament having time-controlled color changing properties, so that each of the first and second type of filament changes its color from an initial color to a second color within a pre-defined time period,
the initial color of the first and second type of filament defining an initial color pattern $\overline{C^*_{ab\ new}}$, the second color of the first and second type of filament defining a second color pattern $\overline{C^*_{ab\ used}}$,
the change from the initial color pattern to the second color pattern being defined by a difference in value of colorfulness

$$\Delta \overline{C_{ab}^*} = \overline{C_{ab\ new}^*} - \overline{C_{ab\ used}^*},$$

wherein the change in value of colorfulness $\Delta \overline{C_{ab}^*}$ is at least 5 in response to use and wear.

In accordance with one aspect an oral care implement is provided, the oral care implement comprising such a head, and a handle, preferably a powered driven handle.

BRIEF DESCRIPTION OF THE DRAWINGS

The invention is described in more detail below with reference to various embodiments and figures, wherein:

Fig. 1 shows a sequence of images of an exemplary head for an oral care implement according to the present disclose, wherein the images show an initial color pattern before use of the head, and a second color pattern after use of the head;
Fig. 2 shows in a schematic manner one embodiment of a filament having time-controlled color changing properties,
Fig. 3 shows in a schematic manner another embodiment of a filament having time-controlled color changing properties;
Fig. 4 shows a sequence of images used for analyzing the colorfulness of the initial color pattern of the head of Fig. 1;
Fig. 5 shows a schematic top-down view of another exemplary head of the present disclosure, the head showing the initial color pattern before use;
Fig. 6 shows a schematic perspective view of the head of Fig. 5;
Fig. 7 shows a table showing various heads tested, the table exhibiting the change in colorfulness and replacement rates, and
Fig. 8 shows a diagram plotting brush replacement rates against change in colorfulness in accordance with the data of Fig. 7.

DETAILED DESCRIPTION OF THE INVENTION

According to the present disclosure, an oral care implement refers to a tool or device used for maintaining oral hygiene and taking care of teeth and gums. The oral care implement may encompass various features to clean, brush, and care for teeth and soft tissue in the mouth. The oral care implement according to the present disclosure can be an electrical i.e., powered driven toothbrush, or a manual toothbrush.

A manual toothbrush is a traditional oral care implement comprising a handle and a brush head with bristles. It requires manual movement and brushing action by the user to remove plaque, food particles, and maintain oral hygiene.

A powered toothbrush, also known as an electric toothbrush, is a toothbrush that incorporates mechanical movements to assist with the brushing process. Powered toothbrushes typically feature oscillating, rotating, or vibrating brush heads, which provide additional cleaning action compared to manual brushing. They often come with built-in timers and force sensors to ensure proper brushing technique and duration.

Both manual and powered toothbrushes aim to effectively remove plaque, prevent tooth decay, and maintain gum health. The choice between these brush types depends on personal preference, oral health conditions, and individual needs. Users are encouraged to follow dental professionals' recommendations and maintain a consistent oral care routine for optimal dental hygiene. Dental professionals typically recommend to brush teeth twice per day, for about 2 minutes. When applying such brushing routines, toothbrushes shall be replaced by a new one after about three (3) months of use.

The head or toothbrush refill of a powered oral care implement may comprise a disk having a circular shape and a mounting surface from which a number of filaments extends. A head for a manual toothbrush or a vibrating toothbrush may have a longitudinal length extension extending between a proximal end and a distal end, the distal end being opposite the proximal end, the proximal end being closest to the handle. Again, the head of a manual toothbrush typically comprises a mounting surface from which a number of filaments extends. The head of a powered or manual oral care implement may be permanently attached, or repeatedly attachable to and detachable from the handle.

According to the present disclosure, the head of or for the oral care implement comprises a number of colored filaments of different types. The filaments are grouped together to define a color pattern. The filaments may be bundled together to form tufts extending from the mounting surface of the head. The number of colored filaments of different types comprises at least a first and a second type of filament. The first and the second filament types have each time-controlled color changing properties. In other words, each of the first and second type of filament changes its color from an initial color to a second color within a pre-defined time period.

The filaments or tufts of filaments are grouped together to define an initial color pattern $\overline{C_{ab\ new}^*}$, the initial color pattern being defined by the initial color of the first type of filament as well as by the initial color of the second type of filament. The initial color pattern represents the color pattern being present before the head is used for brushing for the first time. After a certain time of use and wear of the toothbrush, the initial color pattern $\overline{C_{ab\ new}^*}$ changes to a second color pattern $\overline{C^*_{ab\ used}}$, the second color pattern being defined by the second color of the first type of filament and the second color of the second type of filament.

The change from the initial color pattern to the second color pattern is defined by a difference in value of colorfulness $\Delta\overline{C^*_{ab}} = \overline{C^*_{ab\ new}} - \overline{C^*_{ab\ used}}$. According to the present disclosure, the change in value of colorfulness $\Delta\overline{C^*_{ab}}$ is at least 5 in response to use and wear of the toothbrush.

One common approach to measure colorfulness is to calculate the saturation of a color. Saturation represents the purity or intensity of a color and can be mathematically derived from color model values. To measure a change in colorfulness, the difference in saturation values before and after the change is calculated. By comparing the values, it can be determined whether the change resulted in an increase or decrease in colorfulness.

Colorfulness, in a mathematical sense, can be quantified by using various color models, such as CIELAB (L*a*b*). According to the present disclosure, the change in colorfulness is measured in accordance to the CIELAB color model (CIEDE2000 standard). The CIELAB color space, also referred to as *L*a*b*, is a color space defined by the International Commission on Illumination. It expresses color as three values: *L* for perceptual lightness, and *a* and *b* for the four unique colors of human vision: red, green, blue and yellow. CIELAB is a perceptually uniform space, where a given numerical change corresponds to a similar perceived change in color. CIELAB is used as a standard in industry for detecting small differences in color.

The CIELAB color space is a device-independent, "standard observer" model. The colors it defines are not relative to any particular device such as a computer monitor or a printer, but instead relate to the CIE standard observer which is an averaging of the results of color matching experiments under laboratory conditions. The CIELAB space is three-dimensional and covers the entire gamut (range) of human color perception. It is based on the opponent color model of human vision, where red and green form an opponent pair and blue and yellow form another opponent pair. The lightness value, *L*, defines black at 0 and white at 100. The *a* axis is relative to the green-red opponent colors, with negative values toward green and positive values toward red. The *b* axis represents the blue-yellow opponents, with negative numbers toward blue and positive toward yellow. While the *L* coordinate nominally ranges from 0 to 100, the range of *a* and *b* coordinates is technically unbounded, though it is commonly clamped to the range of -128 to 127 for use with integer code values.

The colorfulness of an article can be calculated as:

$$C^*_{ab} = \sqrt{(a^*)^2 + (b^*)^2}$$

For the description of the colorfulness of a combination of multiple articles or an entire picture (in the present case the bristle/color pattern of the head of an oral care implement/toothbrush when seen in a front view), the $C^*_{ab}$ values of each article of the picture can be determined and the mean over all individual pixel values can be calculated as:

$$\overline{C^*_{ab}} = \frac{1}{n}\sum_{i=1}^{n} C^*_{ab\ i}$$

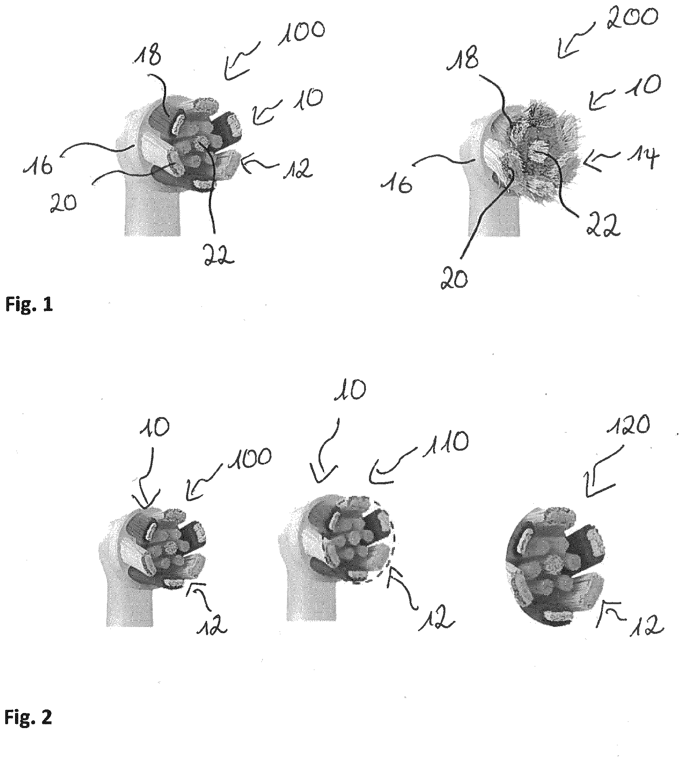

To determine the change in colorfulness of a brush head over a pre-defined period of time/usage time, a picture of the front surface is taken in new condition as well as after a certain period of use (see Fig. 1). The pictures of Fig. 1 show the brush head slightly tilted to a side. The pictures of the brush in the new and used condition are taken under the same viewing angle and lightning conditions. An image analysis tool can be used to calculate $\overline{C^*_{ab}}$ for the new brush as well as for the used brush by analyzing the front surface of the bristle field (see Fig. 2).

The image analysis delivers the values $\overline{C^*_{ab\ new}}$ and $\overline{C^*_{ab\ used}}$. With these values, the change in colorfulness of the brush head after usage is calculated as

$$\Delta\overline{C^*_{ab}} = \overline{C^*_{ab\ new}} - \overline{C^*_{ab\ used}} \ .$$

While negative $\Delta\overline{C^*_{ab}}$ values indicate that the colorfulness increases, positive $\Delta\overline{C^*_{ab}}$ values indicate that the colorfulness decreases. In accordance with the present disclosure, the change in value of colorfulness $\Delta\overline{C^*_{ab}}$ is at least 5 in response to use and wear.

In a large-scale consumer test, different power brush head designs in new and used conditions were shown to test persons. The tested brush heads exhibited various initial and second color patterns. The used conditions represented the wear-out of a brush from an average consumer using the toothbrush for 3 months, 2 times a day, over 2 minutes. A brushing force between 0.5 and 2.5 N was applied (corresponding to a brushing pressure between about 0.3 N/cm$^2$ and about 3 N/cm$^2$, if a typical brush head with a bristling area of about 0.8 cm$^2$ to about 1,8 cm$^2$ is used). The test persons had to comment whether they would consider to replace the used condition brush heads or not.

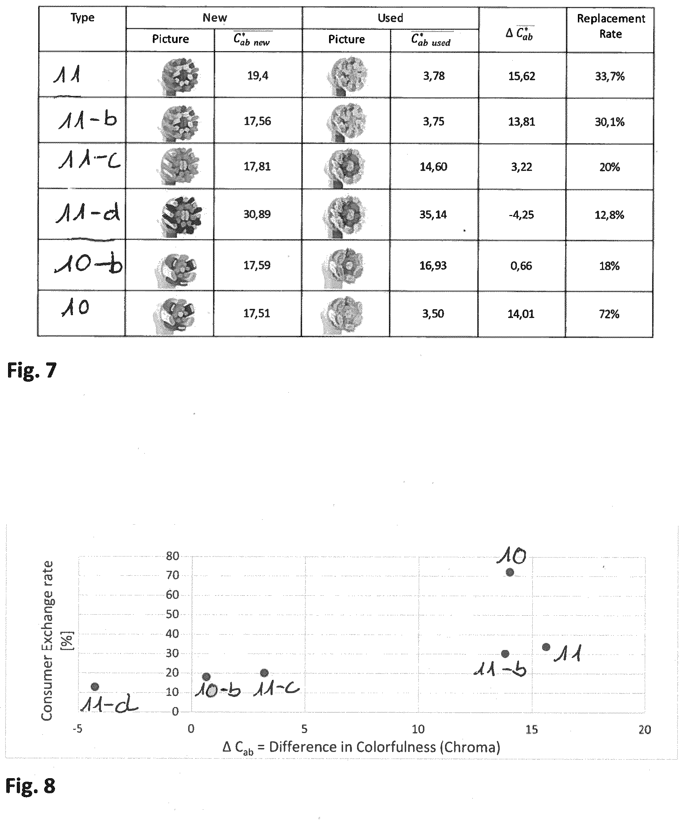

Surprisingly, it has been found out that a change in value of colorfulness $\Delta \overline{C_{ab}^*}$ of at least 5 provided a strong signal to consumers to replace the brush head when the brush head is worn out (after use of 3 months, 2 brush cycles a day, each cycle lasting 2 minutes, brushing force from about 0.5 N to about 2.5 N). The test results clearly showed that a higher and positive difference in colorfulness $\Delta \overline{C_{ab}^*}$ significantly increases the compliance rate of consumer to follow the dentist recommendation to change the toothbrush after about 3 months of use (brushing routine: 2 times a day for two minutes, applying a brushing force from about 0.5 N to about 2.5 N). If the change in value of colorfulness $\Delta \overline{C_{ab}^*}$ is at least 5, compliance rate was at least 30% (see Figs. 7 and 8)

For example, the initial color pattern may change to the second color pattern, thereby exhibiting a change in colorfulness $\Delta \overline{C_{ab}^*}$ of at least 5, after the head is used over about 240 minutes to about 360 minutes, while applying a brushing force from about 0.5 N to about 2.5 N (corresponding to a brushing pressure between about 0.3 N/cm$^2$ and about 3 N/cm$^2$, if a typical brush head with a bristling area of about 0.8 cm$^2$ to about 1,8 cm$^2$ is used). Such time of use before a brush shall be discarded, and force applied during brushing is in line with dentists' recommendations.

The first type of filament and the second type of filament may change their respective colors from the initial color to the second color substantially simultaneously. This means that the initial color pattern may change gradually to the second color pattern within the pre-defined time period. This provides the user with a strong signal that the brush needs to be exchanges with a fresh one as soon as the pre-defined time period has been reached, the pre-defined time period corresponding to the recommended use time of a toothbrush.

The filament arrangement according to the present disclosure is designed in a way that a user can visually detect a signal indicative of the toothbrush wear and replace the worn toothbrush at the right point in time (e.g. after three month of regular/frequent use). According to the present invention, the signal indicative of wear is provided by the use of filaments having the capability to undergo a change in color in response to wear. The second color pattern provides the user with the information that the head of the oral care implement, or the overall toothbrush has to be replaced immediately, while the gradual color change over time provides the user with a pre-warning that the brush has to get exchanged within the next forthcoming weeks. A purchase decision can be taken right in advance.

The head may further comprise a third type of filament which does not change its color over time. The color of the third type of filament may be different from the initial color of each, the first type of filament and the second type of filament. This may provide a head for an oral care implement having even more visual impact and communicates to a user more clearly that the head or complete brush needs to be exchanged. The third type of filament may be a regular, substantially white, greyish, or translucent filament not having any color changing characteristics so that the overall second color pattern may form a substantially uniform white, greyish or translucent color pattern.

The at least first type of filament and the second type of filament may have each a different initial color to define the initial color pattern. Each of the first and second type of filament may change color over the same predefined time period to substantially the same color to form the second color pattern. The second color pattern may consist of a substantially uniform color, preferably of a substantially white, grey and/or translucent color. This provides a user with an even stronger visual signal that the brush head or overall toothbrush shall be exchanged with a fresh one to maintain and enable good oral hygiene routines.

At least one type of filament may be a monofilament, preferably made from polyamide, comprising a water-soluble dye colorant, preferably a food dye, the dye leaching over the pre-defined time period in response to increased use and wear of the filament, thereby changing the color from an initial color to the second color.

The dye may be provided in a colored outer region of the filament, the outer region extending inwardly into a portion of the filament's cross-sectional area for a distance equal from about 20% to about 40%, preferably from about 20% to about 30% of the radius of the filament. Such filament type may provide relatively slow color changing properties, corresponding to dentist's recommended use time.

In other words, the colored outer region is adapted to provide a visual signal indicative of wear in response to the filament use. The colored region provides an initial color or color viewable to the user. As wear is produced by continuing use of the filaments, the color of the colored region changes to a point which signals the user that the filament no longer provides the requisite performance characteristics for effectively performing its assigned function.

The degree of dye penetration and the degree of dye fastness of a selected filament can be coordinated with the wear characteristics of the filament so that the change in color provides a reliable indication of filament deterioration due to wear. In general, with nylon brush filaments, suitable coordination between the distance or degree of dye penetration and dye fastness and the filament's wear characteristics can be achieved, if the colored outer region has an average degree of dye penetration corresponding to the dimensions above.

The inner portion of the monofilament may be translucent, white or grey to provide a strong visual signal as discussed above.

The colored outer region may be provided by a ring dyeing process. In ring dyeing processes, the filament is contacted with a dye for a time sufficient to at least color the outer surface and to also penetrate into a portion of the cross-sectional area to provide a degree of dye penetration as discussed above. Before dying, the filaments may be transparent, translucent or substantially white or grayish. Dyes for providing the colored outer region may be food dyes or certified food colorants. Representative suitable food dyes or colorants are FD&C Red No. 40, Erythrosine (FD&C Red No. 3), Brillant Blue FCF (FD&C Blue No. 1), Indigotine (FD&C Blue No. 2), Tartrozine (FD&C Yellow No. 5), Sunset Yellow FCF (FD&C Yellow No. 6) and Fast Green FCF (FD&C Green No. 3). In dyeing nylon brush filaments, food dyes or colorants such as those mentioned above, may be used in the form of buffered aqueous solutions which include amounts of dye up to about 5 percent by weight or somewhat higher. Depending upon the amount of buffer, the pH of such aqueous dye solutions may range from about 1.3 to about 13 and preferably between about 3 to about 12. Suitable buffers may be potassium phosphate, sodium hydroxide, potassium carbonate, potassium borate and potassium hydroxide. Representative suitable concentrations of buffers can range between about 0.025 to about 0.2 moles per liter of the aqueous dye solutions.

The degree of correlation between filament wear and change in color may depend on various factors, including filament material, physical and chemical properties of the filament material as well as the selected dye (or dyes) and condition of dyeing. A desired degree of correlation between filament wear and change in color can be determined empirically by subjecting a selected filament material to various dyes and conditions of dyeing to establish the degree of dye penetration and dye fastness needed to provide the desired correlation. The preferred degree of correlation is the one in which the desired change in color will occur within the desired time period (e.g. within three months) of average use by the average user.

Depending on the type of toothbrush where the filaments are utilized, e.g. on manual or electrical toothbrushes performing a rotational oscillation movement, the filaments can be exposed to different levels of stress. To accommodate the different levels of stress the filaments are exposed to, the dye or dye formulation, e.g. the dye concentration, can be adjusted accordingly.

Alternatively, or in addition to the above, at least one type of filament may be a core-shell type indicator filament comprising an inner core region and an outer colored shell region, the color of the inner core region being different from the color of the outer shell region, and the filament may change its color over a pre-defined period of time by abrasion and/or degradation. Said type of filament maybe a coextruded, i.e. a composite filament, for example made from polyester.

The colored core may be completely surrounded by the outer shell material, e.g. in the form of an annular ring having a color different from the core color. The change in color by abrasion of the outer shell is indicative of the filament wear. The color changing characteristics, i.e. the time period required during normal use until the inner core becomes visible, can be adjusted by the thickness/dimension of the outer shell. The thicker the shell, the longer it takes until the differently colored core becomes visible.

With that technology, an outer shell region with relatively dark and uniform color with a clear line of demarcation of the colored outer shell versus a differently colored core region can be provided. In other words, the coextruded filament may comprise a longitudinal outer coating layer providing a boundary about the cross-sectional area of the filament and, thus, the cross-sectional area presents a two-colored region adapted to provide a visual signal indicative of wear in response to filament use. The filament can be made from natural or synthetic materials. The colored outer shell region may provide the initial color. As wear is produced by continuing use of the filament, the colored region changes to a point which signals the user that the filament no longer provides the requisite performance characteristics for effectively performing its assigned function. The outer shell region may be a uniform coating around the entire perimeter of the core region.

The colored outer shell region may or may not extend along the entire length of the longitudinal outer surface of the filament. For example, the colored region may extend along a portion of the length, such as a portion including the filament tip which is normally subjected to more intense conditions of wear than other portions of the filament. In this case, the color of said portion of the length will change in response to wear and use. For example, the filament may change the color only over a portion from about 1/3 to about 2/3 of the overall length extension measured from the free end of the filament.

The core may be a reinforcing element and may be relatively hard and stiff to control the rigidity of the filament while the outer cover material may be softer than the core material and is, thus, more susceptible to wear. In use, the cover material becomes worn in the area of the rounded end of the filament and peels or breaks off to expose the core color to signal that the brush should be discarded or discarded soon.

As used herein the term "colored region" can mean a core or shell material which is colored by a colorant prior to being extruded. It can also mean a core or shell which is made of a plastic with a unique color. Furthermore, transparent or translucent regions are also considered to be "colored" as they are at least of different optical appearance than a truly pigmented or dyed region, as is also the case for a shell/core varying degrees of color intensity. However, it is important that the core and shell materials have visually different color, e.g., white core and blue sheath, transparent core and light blue sheath, etc. Preferred filaments according to the present disclosure comprise a white or transparent core and a dyed or pigmented shell.

At least one type of filament may be made of polyamide, e.g. nylon, with or without an abrasive such as kaolin clay, or polybutylene terephthalate (PBT) with or without an abrasive such as kaolin clay and/or of polyamide indicator material, e.g. nylon indicator material.

The core-shell type of filament may comprise at least two segments of different materials. At least one segment may comprise a thermoplastic elastomer material (TPE) and at least one segment may comprise polyamide, e.g. nylon, with or without an abrasive such as kaolin clay, or a polyester, e.g. polybutylene terephthalate (PBT) with or without an abrasive such as kaolin clay or a polyamide indicator material, e.g. a nylon indicator material, colored at the outer surface. These at least two segments may be arranged in a side-by-side structure or in a core-sheath structure which may result in reduced stiffness of the overall filament. A core-sheath structure with an inner/core segment comprising a harder material, e.g. polyamide or PBT, and with an outer/sheath segment surrounding the core segment and comprising a softer material, e.g. TPE, may provide the filament with a relatively soft outer lateral surface which may result in gentle cleaning properties.

At least one of the filament types may comprise a component selected from fluoride, zinc, strontium salts, flavor, silica, pyrophosphate, hydrogen peroxide, potassium nitrate or combinations thereof. For example, fluoride may provide a mineralization effect and, thus, may prevent tooth decay. Zinc may strengthen the immune system of the user. Hydrogen peroxide may bleach/whiten the teeth. Silica may have an abrasive effect to remove dental plaque and debris more effectively. Pyrophosphate may inhibit the formation of new plaque, tartar and dental calculus along the gum line. A filament comprising pyrophosphate may offer lasting protection against inflammations of the gums and mucous membrane of the mouth.

If a plurality of such filaments is bundled together to form a tuft, they may be arranged in a manner that filaments at the tuft's outer lateral surface may comprise pyrophosphate to inhibit the formation of plaque, tartar and dental calculus along the gum line whereas filaments arranged in the center of the tuft may comprise fluoride to mineralize the teeth during a brushing process.

At least one of the components listed above may be coated onto a shell, i.e. onto an outer segment of a filament. Such filament may make the component(s) directly available to the teeth in a relatively high concentration, i.e. the component(s) may be in direct contact with the teeth during brushing.

At least some of the filaments may be a substantially cylindrical filament, i.e. the filament may have a substantially cylindrical outer lateral surface. In other words, the shape and size of the cross-sectional area of the filament along its longitudinal axis may not vary substantially, i.e. the shape and size of the cross-sectional area may be substantially constant over the longitudinal extension of the filament. In the context of this disclosure the term "outer lateral surface of a filament" means any outer face or surface of the filament on its sides. This type of filament may provide increased bending stiffness as compared to tapered filaments. A higher bending stiffness may further facilitate the filament to penetrate into interdental gaps/spaces. The cylindrical filament may have a substantially end-rounded tip/free end to provide gentle cleaning properties. End-rounded tips may avoid that gums get injured during brushing.

Alternatively, or in addition to the cylindrical filaments described above, at least some filaments may comprise along its longitudinal axis a substantially cylindrical portion and a tapered portion, the tapered portion tapers in the longitudinal direction towards a free end of the filament. In other words, the filaments may be tapered filaments having a pointed tip. Tapered filaments may achieve optimal penetration into areas between two teeth as well as into gingival pockets during brushing and, thus, may provide improved cleaning properties. The tapered filaments may have an overall length extending above the mounting surface of the head within a range from about 8 mm to about 16 mm, optionally about 12.5 mm, and a tapered portion within a range from about 5 mm to about 10 mm measured from the tip of the filament. The pointed tip may be needle shaped, may comprise a split or a feathered end. The tapering portion may be produced by a chemical and/or mechanical tapering process.

A head for an oral care implement in accordance with the present disclosure may comprise a bristle carrier being provided with tuft holes, e.g. blind-end bores. Tufts according to the present disclosure may be fixed/anchored in said tuft holes by a stapling process/anchor tufting method. This means, that the filaments of the tufts are bent/folded around an anchor, e.g. an anchor wire or anchor plate, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner. To enable provision of tufts comprising a relatively large cross-sectional area, a plurality of smaller tuft holes can be placed with minimal spacing in close proximity to each other so that a larger overall tuft can be formed.

Alternatively, the tufts may be attached/secured to the head by means of a hot tufting process. One method of manufacturing the head of an oral care implement may comprise the following steps: Firstly, the tufts may be formed by providing a desired amount of filaments according to the present disclosure. Secondly, the tufts may be placed into a mold cavity so that ends of the filaments which are supposed to be attached to the head extend into said cavity. Thirdly, the head or an oral care implement body comprising the head and the handle may be formed around the ends of the filaments extending into the mold cavity by an injection molding process, thereby anchoring the tufts in the head. Alternatively, the tufts may be anchored by forming a first part of the head - a so called "sealplate" - around the ends of the filaments extending into the mold cavity by an injection molding process before the remaining part of the oral care implement may be formed. Before starting the injection molding process, the ends of the at least one tuft extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tuft on the finished head of the oral care implement. In other words, the filaments of the tufts attached to the head by means of a hot tufting process may be not doubled over a middle portion along their length and may be not mounted in the head by using an anchor/staple. The tufts may be mounted on the head by means of an anchor-free tufting process. A hot tufting manufacturing process allows for complex tuft geometries. For example, the tufts may have a specific topography/geometry at its free end, i.e. at its upper top surface, which may be shaped to optimally adapt to the teeth's contour and to further enhance interdental penetration. For example, the topography may be chamfered or rounded in one or two directions, pointed or may be formed linear, concave or convex.

The following is a non-limiting discussion of example embodiments of oral care implements and parts thereof in accordance with the present disclosure, where reference to the Figures is made.

Fig. 1 shows images 100, 200 of an exemplary head 10 for an oral care implement according to the present disclose. Head 10 is a brush head refill for an electric toothbrush. Head 10 comprises a number of colored filaments of different types 18, 20, 22 which extend from a mounting surface 16 of the head 10. The mounting surface 16 of the head 10 is adapted to oscillate in a rotational direction during brushing. The filaments 18, 20, 22 are grouped together to define a color pattern. A first type of filament 18 and a second type of filament 20 extending from the mounting surface 16 of head 10 have time-controlled color changing properties, so that each of the first and second type of filament 18, 20

changes its color from an initial color to a second color within a pre-defined time period. In the present case, the first type of filament 18 is a filament changing its initial color from dark blue to a second color which is substantially white, greyish and/or translucent, and the second type of filament 20 is a filament changing its initial color from light blue to a second color which is substantially white, greyish and/or translucent. The head 10 further comprises a third type of filament 20 which does not change color over time. In the present case, the third type of filament 20 is a substantially while filament.

Images 100, 200 show the head 10 before use exhibiting an initial color pattern 12, and after use exhibiting a second color pattern 14, respectively. The initial color pattern 12 is defined by the initial color of the first and the second type of filament 18, 20 as well as by the color of the third type of filament 22. The initial color pattern 12 is described by $\overline{C^*_{ab\ new}}$ and consists in the present case of light blue, dark blue and substantially white. The second color pattern 14 is defined by the second color of the first and the second type of filament 18, 20 as well as by the color of the third type of filament 22. The second color pattern 14 is described by $\overline{C^*_{ab\ used}}$ and consists in the present case of a substantially white, greyish and/or translucent color. The first type of filament 18 and the second type of filament 20 change their color from the initial color to the second color substantially simultaneously. A change from the initial color pattern 12 to the second color pattern 14 is defined by a difference in value of colorfulness which is described by $\Delta \overline{C^*_{ab}} = \overline{C^*_{ab\ new}} - \overline{C^*_{ab\ used}}$. In the present case, the initial color pattern 12 changes to the second color pattern 14 after the head is used over about 240 minutes to about 360 minutes, by applying a brushing force from about 0.5 N to about 2.5 N (corresponding to a brushing pressure between about 0.3 N/cm$^2$ and about 3 N/cm$^2$, if a typical brush head with a bristling area of about 0.8 cm$^2$ to about 1,8 cm$^2$ is used). According to the present disclosure, the change in value of colorfulness $\Delta \overline{C^*_{ab}}$ is at least 5 in response to use and wear.

Fig. 2 shows a sequence of images 100, 110, 120 used for analyzing the colorfulness of the color pattern of the head. In a first step, a picture/image 100 is taken from the front surface of brush head 10, slightly tilted to a side. In a second step, image 110 is provided, selecting the area (bristle/filament field) of the brush head 10 to be analyzed. In a third step, the selected area is extracted as image 120 which is then analyzed by an image analysis tool. In the present case, Matlab R2023b "Image Processing Toolbox" was used as an image analysis tool, calculating the colorfulness under ISO Standard ISO/CIE 11664-6:2014 Colorimetry - Part 6: CIEDE2000 Colour-difference formula. However, any other suitable image analysis tool calculating the colorfulness under ISO Standard ISO/CIE 11664-6:2014 can be used as well.

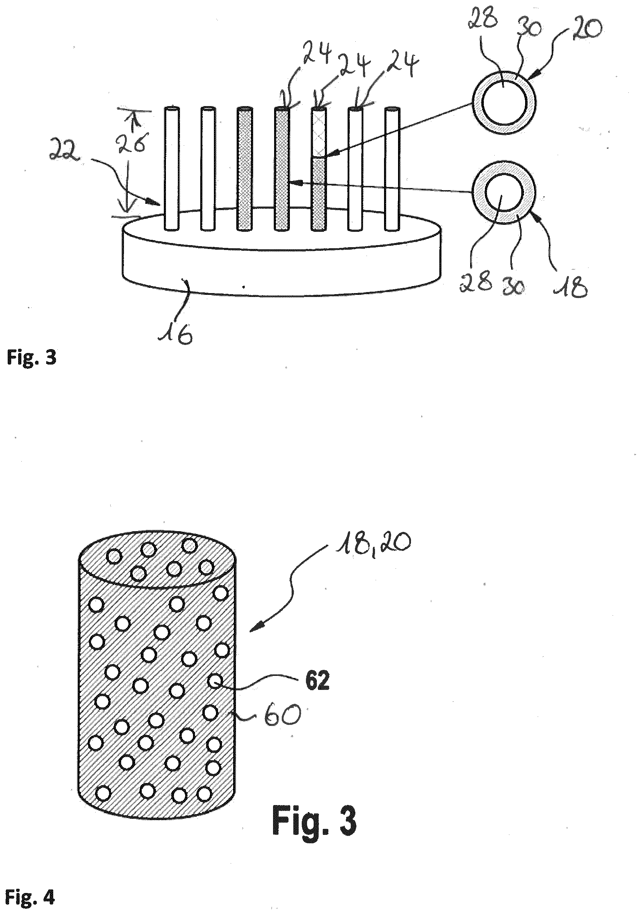

As shown in Figs. 3 and 4, the first and second type of filaments 18, 20 have an overall length extension 26 measured from the free end 24 to the mounting surface 16. In the present case, the filaments 18, 20 may change the color only over a portion of the overall length extension 26, e.g. over a portion from about 1/3 to about 2/3 of the overall length extension measured from the free end 24 of the filament 18, 20.

The filaments 18, 20 shown in Fig. 3 are core-shell type indicator filament comprising an inner core region 28 and an outer colored shell region 30, the color of the inner core region 28 being different from the color of the outer shell region 30. The filaments 18, 20 change the color over the pre-defined time period by abrasion and/or degradation of the outer shell region 30. The core-shell type indicator filaments 18, 20 can be coextruded filament, e.g. being made from polyester. In the present case, filament 18 has a dark blue outer shell 30, and a substantially white, grey or translucent inner core 28. Filament 20 has a light blue outer shell 30, and a substantially white, grey or translucent inner core 28.

Fig. 4 shows an alternative filament type 18, 20 having time-controlled color changing properties, and being suitable to be used in connection with the present invention. Filament 18, 20 as shown in Fig. 4 is a monofilament, e.g. being made from polyamide. Filament 18, 20 of Fig. 4 comprises a water-soluble dye colorant 62. The dye 62 leaches out over the pre-defined time period in response to increased use and wear of the filament 18, 20, thereby changing the color from the initial color to the second color. The dye 62 can be provided in a colored outer region extending inwardly into a portion of the filament's cross-sectional area, e.g. for a distance equal from about 20% to about 40%, or from about 20% to about 30% of the radius of the filament 18, 20. In the present case, the base material 60 of filaments 18, 20 is substantially translucent, white or grey, while the dye 62 is dark blue and light blue for filaments 18 and 20, respectively.

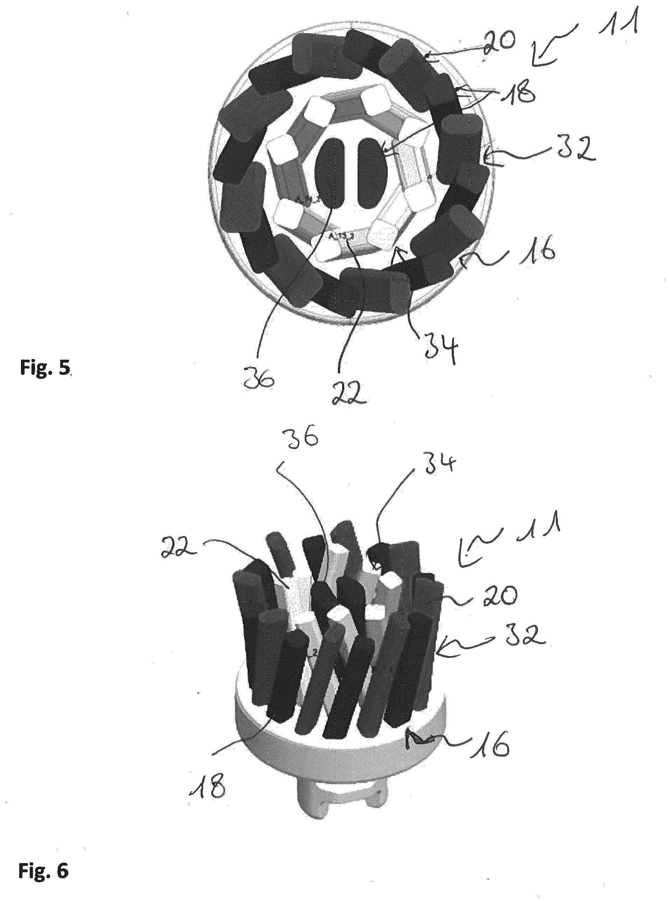

Fig. 5 shows a schematic top-down view and Fig. 6 a respective perspective view of another exemplary head 11 in accordance with the present disclosure, the head 11 showing the initial color pattern 112 (i.e. in a state before the head 11 is used). Head 11 comprises an outer ring 32 of counter-clockwise-inclined filaments bundled together to form tufts of alternating length, and an opposing inner ring 34 of clockwise-inclined filaments, bundled together to form tufts of alternating length. The inner ring 34 surrounds two central halfmoon-shaped filament tufts 36.

Again, head 11 comprises a number of colored filaments of different types 18, 20, 22 which extend from a mounting surface 16. Again, filaments 18 and 20 have time-controlled color changing properties, so that each of the filaments 18, 20 change color from an initial color to a second color within a pre-defined time period. The filaments 18, 20 can be core-shell type indicator filaments and/or monofilaments comprising a water-soluble dye leaching out over time (cf. Figs. 3 and 4). The first type of filament 18 changes its color from dark blue to substantially translucent, white or grey, and the second type of filament 20 changes its color from light blue/mint/green to substantially translucent, white or grey. Third type of filament 22 is a standard white filament, not undergoing any color change. In other words, the second color pattern 14 visible after the head has been used over the pre-determined period of time is substantially white, greyish or translucent. The resulting change in the value of colorfulness is at least 5 in response to wear and use.

COMPARISON EXPERIMENTS

In a digital survey, 500 panelists have been asked to evaluate different power brush head images, showing various brushes in new and used conditions (see images depicted in Fig. 7). The used conditions represent the wear-out of a brush of an average user/consumer who brushes two times a day for two minutes with a brushing force between 1.5 - 2.5 N. The brushes were used over three months. The panelists had to comment whether they would consider replacing the brush head or not. The brush head images differ by brush head type, bristles colors and level of indicator color fading. Every panelist was shown four (4) renderings at a time and was asked to select the brush head they would most likely replace with a fresh one. The panelists were additionally asked if they would have replaced their own brush head if it would have looked similar to the one selected. A total of 16 pictures were shown to each panelist, in a randomized setup.

To determine the change in colorfulness of the tested brush heads, pictures of the front surface of the heads were taken in the new condition and after the period of use discussed in the paragraph above. The tested brush heads shown in the images are slightly tilted to a side. The pictures of the heads were taken under the same viewing angle and lightning conditions. An image analysis tool was used to calculate $\overline{C^*_{ab\ new}}$ and $\overline{C^*_{ab\ used}}$, for the new and used brushes, respectively, by analyzing the front surface of the bristle field/field of filaments (cf. Fig. 2). For the various brush heads tested, $\overline{C^*_{ab\ new}}$, $\overline{C^*_{ab\ used}}$ as well as the difference/change of the value in colorfulness $\Delta \overline{C^*_{ab}}$ are derivable from the table in Fig. 7. The data shown in Fig. 7 and depicted in the diagram of Fig. 8 (plotting the brush replacement rates against change in colorfulness) clearly show that a positive difference in colorfulness $\Delta \overline{C^*_{ab}}$ of at least 5 significantly increases the compliance rate of consumers exchanging the brush head after the recommended period of use (i.e. after about three months, by brushing two times a day for two minutes), thereby following dentist's recommendations. Brush head types 11, 11-b (corresponding to the brush head shown in Figs. 5 and 6) and brush head type 10 (corresponding to the brush head shown in Figs. 1 and 2) are in accordance with the present disclosure and exhibit a change in value of colorfulness of about 15, 13 and 14, corresponding to a replacement rate of about 33%, 30% and 72%, respectively. The consumer tests clearly show that the type of color variation of the bristle field has a significant impact on the replacement behavior of a consumer - the brush heads according to the present disclosure result in a replacement rate of at least 30%. In contrast to brush head types 11, 11-b and 10, brush head types 11-c, 11-d and 10-b exhibit a change in colorfulness of less than 4, resulting in a brush replacement rate between about 12% and 20% only, considered insufficient by dentists. While the values of colorfulness of the initial color patterns $\overline{C^*_{ab\ new}}$ of all toothbrush heads tested is above 17 (i.e. relatively colorful), the second color patterns of the toothbrush heads in accordance with the present disclosure (11, 11-b, 10) exhibit values of colorfulness $\overline{C^*_{ab\ used}}$ of 4 at maximum (i.e. relatively colorless). The second color patterns of the toothbrush heads not according to the present disclosure (11-c, 11-d, 10b) exhibit a value of colorfulness of at least 14, still too colorful to motivate a user to exchange the head.

The brush head replacement/exchange rate after three months of use is at least 50% higher for the brush heads according to the present disclosure (11, 11-b, 10-b having an exchange rate of at least 30%) as compared to the brush heads tested not according to the present disclosure (11-c, 11-d, 10-b having an exchange rate of maximal 20%).

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1. A head (10, 11) for an oral care implement, the head (10, 11) comprising a number of colored filaments of different types (18, 20, 22), the filaments (18, 20, 22) extending from a mounting surface (16) of the head (10, 11) and being grouped together to define a color pattern,

the number of colored filaments of different types (18, 20, 22) comprising at least a first type of filament (18) having time-controlled color changing properties, and a second type of filament (20) having time-controlled color changing properties, so that each of the first and second type of filament (18, 20) changes its color from an initial color to a second color within a predefined time period,
the initial color of the first and second type of filament (18, 20) defining an initial color pattern $\overline{C^*_{ab\ new}}$ (12),
the second color of the first and second type of filament (18, 20) defining a second color pattern $\overline{C^*_{ab\ used}}$ (14),
the change from the initial color pattern (12) to the second color pattern (14) being defined by a difference in value of colorfulness $\Delta\overline{C^*_{ab}} = \overline{C^*_{ab\ new}} - \overline{C^*_{ab\ used}}$,
wherein the change in value of colorfulness $\Delta\overline{C^*_{ab}}$ is at least 5 in response to use and wear.

2. A head (10, 11) according to claim 1, wherein the initial color pattern (12) changes to the second color pattern (14) after the head (10, 11) is used over about 240 minutes to about 360 minutes, by applying a brushing force from about 0.5 N to about 2.5 N.

3. A head (10, 11) according to any of the preceding claims, wherein the first type of filament (18) and the second type of filament (20) change their color from the initial color to the second color substantially simultaneously.

4. A head (10, 11) according to any of the preceding claims, wherein the head (10, 11) further comprises a third type of filament (22), the third type of filament (22) not changing its color over time.

5. A head (10, 11) according to claim 4, wherein the color of the third type of filament (22) is different from the initial color of each, the first type of filament (18) and the second type of filament (20).

6. A head (10, 11) according to any of the preceding claims, wherein the at least first type of filament (18) and the second type of filament (20) have each a different initial color to define the initial color pattern (12), each of the first and second type of filament (18, 20) changing color over the same pre-defined time period to substantially the same color to form the second color pattern (14).

7. A head (10, 11) according to any of the preceding claims, wherein the second color pattern (14) consists of a substantially uniform color, preferably of a substantially white, grey and/or translucent color.

8. A head (10, 11) according to any of the preceding claims, wherein at least one of the first and second type of filament (18, 20) is a monofilament, preferably made from polyamide, comprising a water-soluble dye colorant (62), preferably a food dye, the dye (62) leaching over the pre-defined time period in response to increased use and wear of the filament, thereby changing the color from the initial color to the second color.

9. A head (10, 11) according to claim 8, wherein the dye (62) is provided in a colored outer region extending inwardly into a portion of the filament's cross-sectional area for a distance equal from about 20% to about 40%, preferably from about 20% to about 30% of the radius of the filament (18, 20).

10. A head (10, 11) according to claim 9, wherein the filament (18, 20) comprises a base material (60) which is translucent, white or grey.

11. A head (10) according to any of the preceding claims, wherein at least one of the first and second type of filament (18, 20) is a core-shell type indicator filament comprising an inner core region (28) and an outer colored shell region (30), the color of the inner core region (28) being different from the color of the outer shell region (30), and the filament (18, 20) changing its color over the pre-defined time period by abrasion and/or degradation of the outer shell region (30).

12. A head (10, 11) according to claim 11, wherein the filament (18, 20) is a coextruded filament, preferably being made from polyester.

13. A head (10, 11) according to any of the preceding claims, wherein the filaments (18, 20, 22) have an overall length extension (26) measured from the free end (24) to the mounting surface (16), and at least one of the first and second type of filament (18, 20) changes its color only over a portion of the overall length extension (26), preferably over a portion from about 1/3 to about 2/3 of the overall length extension (26) measured from the free end (24) of the filament (18, 20).

14. A head (10, 11) according to any of the preceding claims, wherein the head is a brush head refill for an electric toothbrush, preferably the mounting surface (16) of the head (10, 11) being adapted to oscillate in a rotational direction during brushing.

15. An oral care implement comprising a head (10, 11) according to any of the preceding claims, and a handle, preferably a powered driven handle.

**Fig. 1**

**Fig. 2**

Fig. 3

Fig. 3

Fig. 4

Fig. 5

Fig. 6

| Type | New | | Used | | $\Delta \overline{C_{ab}^*}$ | Replacement Rate |
|---|---|---|---|---|---|---|
| | Picture | $\overline{C_{ab\ new}^*}$ | Picture | $\overline{C_{ab\ used}^*}$ | | |
| 11 | | 19,4 | | 3,78 | 15,62 | 33,7% |
| 11-b | | 17,56 | | 3,75 | 13,81 | 30,1% |
| 11-c | | 17,81 | | 14,60 | 3,22 | 20% |
| 11-d | | 30,89 | | 35,14 | -4,25 | 12,8% |
| 10-b | | 17,59 | | 16,93 | 0,66 | 18% |
| 10 | | 17,51 | | 3,50 | 14,01 | 72% |

**Fig. 7**

**Fig. 8**

Europäisches
Patentamt

European
Patent Office

Office européen
des brevets

# EUROPEAN SEARCH REPORT

**Application Number**

**EP 24 17 7305**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/145162 A1 (BAERTSCHI ARMIN [CH] ET AL) 20 May 2021 (2021-05-20) <br> * paragraphs [0008], [0009], [0213], [0219] - [0221] * <br> * figures 1-14 * <br> ----- | 1-15 | INV. <br> A46B9/04 <br> A46B15/00 <br> A46D1/00 |
| X | US 2019/014898 A1 (NEWMAN MATTHEW LLOYD [US] ET AL) 17 January 2019 (2019-01-17) <br> * claims 1,2,7,8 * <br> ----- | 1-15 | |
| A | US 2003/178885 A1 (WEIHRAUCH GEORG [DE]) 25 September 2003 (2003-09-25) <br> * paragraph [0017] * <br> ----- | 1-15 | |

|  |
|---|
| **TECHNICAL FIELDS SEARCHED (IPC)** |
| A46B <br> A46D |

The present search report has been drawn up for all claims

| Place of search | Date of completion of the search | Examiner |
|---|---|---|
| The Hague | 12 November 2024 | Raybould, Bruce |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 7305

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | Publication date | Patent family member(s) | | Publication date |
|---|---|---|---|---|
| US 2021145162 A1 | 20-05-2021 | EP | 3598920 A1 | 29-01-2020 |
| | | EP | 3826507 A2 | 02-06-2021 |
| | | US | 2021145162 A1 | 20-05-2021 |
| | | WO | 2020020793 A2 | 30-01-2020 |
| US 2019014898 A1 | 17-01-2019 | CA | 2953250 A1 | 21-01-2016 |
| | | CN | 106488724 A | 08-03-2017 |
| | | EP | 3169185 A1 | 24-05-2017 |
| | | ES | 2935111 T3 | 01-03-2023 |
| | | JP | 6275917 B2 | 07-02-2018 |
| | | JP | 2017520330 A | 27-07-2017 |
| | | US | 2016015163 A1 | 21-01-2016 |
| | | US | 2019014898 A1 | 17-01-2019 |
| | | WO | 2016010945 A1 | 21-01-2016 |
| US 2003178885 A1 | 25-09-2003 | AR | 041492 A1 | 18-05-2005 |
| | | AT | E271807 T1 | 15-08-2004 |
| | | AU | 1220602 A | 02-04-2002 |
| | | BR | 0113947 A | 29-07-2003 |
| | | CA | 2422001 A1 | 12-03-2003 |
| | | CN | 1461191 A | 10-12-2003 |
| | | DE | 10046536 A1 | 28-03-2002 |
| | | EG | 23017 A | 31-12-2003 |
| | | EP | 1318735 A1 | 18-06-2003 |
| | | ES | 2225618 T3 | 16-03-2005 |
| | | JP | 2004508863 A | 25-03-2004 |
| | | KR | 20030032040 A | 23-04-2003 |
| | | MX | PA03002336 A | 24-06-2003 |
| | | PL | 360545 A1 | 06-09-2004 |
| | | RU | 2283607 C2 | 20-09-2006 |
| | | SK | 3282003 A3 | 01-07-2003 |
| | | US | 2003178885 A1 | 25-09-2003 |
| | | US | 2006186725 A1 | 24-08-2006 |
| | | WO | 0224026 A1 | 28-03-2002 |
| | | YU | 19403 A | 03-09-2004 |
| | | ZA | 200301747 B | 03-03-2004 |

EPO FORM P0459

For more details about this annex : see Official Journal of the European Patent Office, No. 12/82